# EUROPÄISCHE PATENTSCHRIFT

(11) **EP 2 045 124 B1**
(45) Veröffentlichungstag und Bekanntmachung des Hinweises auf die Patenterteilung: **27.04.2011**
(21) Anmeldenummer: 07022934.9
(22) Anmeldetag: 27.11.2007
(51) Int. Cl.: B60P 3/22, B60P 1/60

(54) **Kessel für ein Silofahrzeug**
Tank for a silo vehicle
Cuve pour un véhicule silo

(30) Priorität: 05.10.2007 DE 202007013969 U
(43) Veröffentlichungstag der Anmeldung: 08.04.2009
(73) Patentinhaber: Feldbinder Spezialfahrzeugwerke GmbH, 21423 Winsen/Luhe (DE)
(72) Erfinder: Beckmann, Jan-Dirk, 21423 Winsen/Luhe (DE); Feldbinder, Otto, 29643 Neuenkirchen (DE)
(74) Vertreter: Richter, Werdermann, Gerbaulet & Hofmann

(56) Entgegenhaltungen:
- EP-A- 1 201 567
- DE-B- 1 143 446
- DE-B- 1 220 784
- DE-U- 1 997 197
- DE-U- 7 205 859
- US-A- 3 139 286
- US-E- R E35 580

## Beschreibung

Die Erfindung betrifft einen Kessel für ein Silofahrzeug, der einen zylindrischen Behälter und einen Auslass im Bodenbereich des Kessels umfasst.

Als Silofahrzeug wird im Allgemeinen ein Fahrzeug bezeichnet, das einen Kessel bzw. Behälter aufweist, der zum Transport von rieselfähigem Schüttgut, wie beispielsweise Zucker, Kunststoffgranulat, Mehl, Getreide, Futtermittel, Zement oder Kohlenstaub, ausgebildet ist. Bei einem Silofahrzeug kann es sich bspw. um einen Lastkraftwagen, einen Sattelschlepperauflieger oder auch einen Eisenbahnwaggon handeln.

Zur Entleerung der Kessel weisen diese in ihrem unteren Bodenbereich in der Regel einen Auslass auf. Durch einen solchen auch häufig als Euter bezeichneten Auslauftrichter kann das transportierte Schüttgut aufgrund der Schwerkraft oder unter Zuhilfenahme von Druckluft aus dem Kessel ausgelassen werden. Die Kessel selber sind im Allgemeinen als zylindrische Behälter ausgebildet, um den hohen Innendruckbelastungen während der Entladung standhalten und gleichzeitig die Wandungen des Behälters möglichst dünn ausbilden zu können.

Bei derartigen Kesseln kann es häufig vorkommen, dass im Bodenbereich des zylindrischen Behälters, insbesondere in denjenigen Bereichen, die entfernt vom Auslass angeordnet sind, selbst bei Durchführung einer Druckluftentleerung, Reste des Transportgutes im Behälter verbleiben. Dies ist zum einen unwirtschaftlich, da dadurch durch den Transport eine Schüttguteinbuße im Hinblick auf die Gesamtschüttgutmenge entsteht. Zum anderen wird dadurch die Häufigkeit von notwendigen Reinigungen des Kessels erhöht, was nachteilig ist, da diese aufwendig und kostspielig sind und der Kessel während des häufig sehr langwierigen Reinigungsvorganges nicht eingesetzt werden kann. Ferner kann auch der Entladevorgang selbst, nach Abhängigkeit der Eigenschaften des zu transportie renden Schüttgutes, bei dieser Bauart relativ lange (teilweise mehr als eine Stunde) dauern.

Um diesen Nachteilen zu begegnen, wurden in der Vergangenheit Kessel in der so genannten Bananenform, bzw. Kessel mit V-förmig geknicktem Behälter eingesetzt. Bei diesen Bauarten bildet der Auslass die tiefste Stelle des Behälters und befindet sich im Knickbereich der V-Form. Bei symmetrisch ausgebildetem Kessel ist der Auslass somit mittig angeordnet. Hierdurch wird erreicht, dass sich in Längsrichtung betrachtet von den Endbereichen bis zum Auslass jeweils eine Neigung in Bezug auf die Längsachse des Behälters bzw. eine Horizontalachse einstellt. Somit kann das Transportgut entlang der Schräge zum Auslass gleiten und wird durch die Schwerkraft zu diesem gedrängt. Insgesamt wird die Entleerungseffektivität dadurch verbessert.

Nachteilig ist allerdings, dass bei der Bananenform bzw. dem V-förmig geknickten Behälter der Laderaum insgesamt verkleinert wird. Dies liegt darin begründet, dass der obere Bereich des Behälters weiterhin in der Art eines Zylinders geradlinig ausgebildet ist und die Gesamthöhe der Silofahrzeuge aufgrund gesetzlicher bzw. verkehrstechnischer Vorgaben nicht erhöht werden kann. Dadurch läuft der Behälter bei dieser Bauform in seinen Endbereichen kegelstumpfförmig zusammen und ist nicht mehr zylindrisch ausgebildet. Mit anderen Worten verringert sich der Innenraumdurchmesser des Behälters je weiter man sich dem Endbereich nähert. Hierdurch wird der Laderaum gegenüber der ausschließlich zylindrischen Ausbildung signifikant verkleinert. Ferner ist ein derartiger, bananenförmiger Behälter sehr viel komplexer und aufwendiger herstellbar als ein zylindrischer Behälter, wodurch die Herstellungskosten insgesamt erhöht werden.

Die US 3,139,286 A zeigt einen Kessel mit einem zylindrischen Behälter, welcher in seinem unteren, mittleren Bodenbereich eine Ausnehmung aufweist. Im Inneren des Zylinders sind zwei Einsatzböden vorgesehen, die in Längsrichtung des zylindrischen Behälters ausgerichtet sind und jeweils mit einem ersten Endbereich an die Ausnehmung im mittleren Bodenbereich und mit ihrem zweiten Endbereich an eine Stirnfläche des zylindrischen Behälters angrenzen. Die Einsatzböden sind in Längsrichtung des zylindrischen Behälters betrachtet von ihrem zweiten Endbereich bis zum ersten Endbereich schräg von oben nach unten verlaufend ausgerichtet. Durch die schräge Ausrichtung der Einsatzböden, auf denen das Schüttgut zum Aufliegen kommt, kann das Schüttgut bei Entleerung des Behälters entlang der Schräge zur Ausnehmung gleiten, so dass der Entleerungsvorgang gegenüber einem zylindrischen Behälter ohne Einsatzböden verbessert wird. Nachteilig ist jedoch, dass im Bereich der Ausnehmung eine aufwendige Stahlplattenkonstruktion vorzusehen ist, mit der der Ausnehmungsbereich verkleidet und einen Auslass zum Herauslassen des Schüttgutes hergestellt wird.

Daher ist es Aufgabe der vorliegenden Erfindung, einen Kessel für ein Silofahrzeug anzugeben, der möglichst einfach aufgebaut und kostengünstig herstellbar ist, eine effektive Entladung ermöglicht und einen möglichst großen Laderaum bietet.

Diese Aufgabe wird mit einem Kessel für ein Silofahrzeug mit den Merkmalen des Anspruchs 1 gelöst.

Kerngedanke der Erfindung ist es demnach, bei einem herkömmlichen, zylindrisch ausgebildeten Behälter mit einem Auslass im Bodenbereich des Kessels zwei Einsatzböden zum Einsetzen in den Behälter vorzusehen. Der Begriff "Einsatzboden" bezeichnet dabei ein Element zum Einbringen bzw. Einsetzen in den Behälter, das zumindest in Teilbereichen als Innenboden des Lagerraums im Inneren des Behälters dient. Ein Einsatzboden ist somit zur Aufnahme bzw. Auflage von Schüttgut ausgebildet. Er ersetzt somit zumindest in Teilbereichen den eigentlichen Behälterboden bzgl. seiner Auflage- bzw. Aufnahmefunktion.

Die Einsatzböden sind ferner derart auszubilden, dass jeweils ein erster Endbereich der Einsatzböden dem Auslass zugeordnet ist und die Einsatzböden vom ersten Endbereich zu einem gegenüberliegend angeordneten, zweiten Endbereich jeweils durchgehend eine Neigung mit Bezug auf die Längsachse des Behälters aufweisen. Da Behälter von Kesseln von Silofahrzeugen im Allgemeinen entlang einer Horizontalachse ausgerichtet sind, weisen die eingesetzten Einsatzböden somit im Regelfall eine Neigung bzgl. einer Horizontalachse auf und bilden somit eine schräge Fläche bzw. schiefe Ebene, an der entlang das Schüttgut beim Entladevorgang aufgrund von Schwerkraft gleiten kann. Der erste Endbereich der Einsatzböden ist dem Auslass zuzuordnen, d. h., in dessen Nähe bzw. benachbart hierzu derart anzuordnen, dass das Schüttgut vom ersten Endbereich der Einsatzböden direkt in den Auslass rieseln kann. Der erste Endbereich der Einsatzböden bildet somit zweckmäßigerweise den am tiefsten gelegenen Bereich der Einsatzböden in Bezug auf eine Vertikalachse bzw. die Höhe des Behälters. Vorteilhafterweise verlaufen die Einsatzböden jeweils von einem Endbereich des Behälters bis hin zum Auslass, so dass sich vom

Auslass aus gesehen hinter und unter den Einsatzböden kein Transportgut sammeln kann. Somit würden die dem ersten Endbereich gegenüber liegenden zweiten Endbereiche der Einsatzböden jeweils an einem Behälterendbereich anliegen. Zweckmäßigerweise liegen die Einsatzböden auch in ihrem Seitenbereich an der Wandung des Behälters an, so dass von dort kein Schüttgut unter die Einsatzböden rieseln kann.

Dadurch, dass zwei Einsatzböden vorgesehen werden, wird die Laderaumoptimierung weiter verbessert. Insbesondere ist es bei dieser Ausführungsform zweckmäßig, den Auslass im mittleren Bereich des Kessels anzuordnen. Die Einsatzböden verlaufen jeweils in einer Seitenbetrachtung bzw. in einer Längsschnittbetrachtung vom Auslass schräg nach oben zu den Endbereichen des Behälters. Somit ergibt sich in der Seitenansicht ein V-förmiges Profil der beiden Einsatzböden, wobei jeder Boden einen V-Schenkel bildet.

Ferner sind die beiden Einsatzböden in ihren ersten Endbereichen miteinander durch Verschweißung fest verbunden. Hierdurch wird die Stabilität des Kessels weiter verbessert. Die beiden ersten Endbereiche der beiden Einsatzböden stoßen somit aneinander und werden in diesem Stoßbereich miteinander verbunden. Weiterhin ist der Auslass ebenfalls im Stoß- bzw. Verbindungsbereich anzuordnen, da dies den tiefsten Punkt für die beiden Einsatzböden darstellt.

Auch ist im Bodenbereich des Behälters eine Ausnehmung vorgesehen, durch die hindurch die beiden ersten Endbereiche der zwei Einsatzböden nach außen ragen. Der Auslass ist somit außerhalb des eigentlichen Behälterinnenraums, nämlich im Verbindungsbereich der beiden Einsatzböden, der sich entsprechend außerhalb des Behälters befindet, anzuordnen. Vorteilhaft ist hierbei, dass der zur Lagerung bzw. zum Transport von Schüttgut zur Verfügung stehende Innenraum des Kessels insgesamt vergrößert wird, ohne dass die Form des Behälters selbst verändert werden muss. Die Einsatzböden ragen also vom Innenraum des Behälters durch die Ausnehmung aus diesem hervor und vergrößert somit insgesamt den Lagerraum. Zweckmäßigerweise sind die Einsatzböden bzw. der Behälter im Bereich der Ausnehmung derart auszubilden, dass sich insgesamt ein geschlossener Kessel ergibt und nur der Auslass eine Öffnung nach außen zur Entleerung des Schüttgutes darstellt. Diese Vergrößerung des Lagerraums nach unten ist insbesondere deswegen zweckmäßig, da dort im Falle von Sattelschlepperauflegern zwischen den Achsen, bzw. im Falle von Eisenbahnwaggons zwischen den Spurrädern genügend Platz für die Ausweitung des Kesselinnenraums verbleibt. Im oberen oder seitlichen Bereich wäre eine derartige Ausdehnung des Kesselinnenraums hingegen aufgrund von Breiten- und Höhenbeschränkungen des Silofahrzeuges nicht möglich. Die Ausnehmung ist in einer Draufsicht rechteckig ausgebildet und im mittleren Bodenbereich des Behälters vorgesehen.

Vorteilhaft ist bei der vorliegenden Erfindung, dass zum einen durch die schräg eingesetzten Einsatzböden der Entleerungsvorgang verbessert bzw. effektiver wird. Weiterhin kann trotzdem ein herkömmlicher, zylindrischer Behälter eingesetzt werden, der am einfachsten und kostengünstigsten herzustellen ist. Schließlich wird der zur Verfügung stehende Laderaum, im Vergleich zur Bananenform bzw. zum V-förmig geknickten Behälter, weniger stark gegenüber dem klassischen, zylindrischen Behälter ohne Einsatzböden reduziert. Zwar kann der Bereich unterhalb der Einsatzböden, d. h. zwischen Behälterboden und Unterseite der Einsatzböden, im Regelfall nicht zur Lagerung von Schüttgut verwendet werden, jedoch wird hierdurch der Laderaum weniger stark reduziert als bei der Bananenform, da der Behälter an sich weiterhin zylindrisch ausgebildet ist und nicht kegelstumpfförmig zu seinen Endbereichen zusammenläuft.

Bevorzugte Ausführungsformen der Erfindung sind in den Unteransprüchen gekennzeichnet.

Zweckmäßiger Weise sind die Einsatzböden fest im Behälter eingebaut. Hierfür bietet es sich insbesondere an, die Einsatzböden mit dem Behälter zu verschweißen. Die Behälterwandungen bestehen häufig aus Metall, insbesondere aus Aluminiumknetlegierungen. Für eine Verschweißung von Einsatzböden mit Behälterwandung ist es daher zweckmäßig, die Einsatzböden zumindest teilweise ebenfalls aus einem Metall auszubilden. Grundsätzlich können die Einsatzböden aber aus jedem aus dem Stand der Technik bekannten und hierfür geeigneten Material hergestellt sein. Durch die feste Verbindung von Einsatzböden und Behälter wird eine Fixierung in einer optimalen Position der Einsatzböden erreicht und ein Verrutschen oder dergleichen ist ausgeschlossen.

Zweckmäßigerweise sind die Einsatzböden bzgl. ihrer Anordnung und Ausgestaltung entlang der Längsachse des Behälters auszurichten. Mit anderen Worten sind die Einsatzböden zweckmäßigerweise länglich gestaltet und verlaufen in Richtung ihrer längsten Ausdehnung im Wesentlichen entlang der Längsachse. Hierdurch kann eine optimale Raumnutzung des Innenraums des Kessels geschaffen werden.

In einer weiteren bevorzugten Ausführungsform weisen die Einsatzböden in einer Querschnittsbetrachtung im Bezug auf die Horizontalachse zumindest teilweise eine Neigung auf. Mit anderen Worten weisen die Einsatzböden, zusätzlich zur Längsneigung, auch eine Querneigung bzw. ein Quergefälle auf. Vorteilhaft ist hierbei, dass das Schüttgut nicht nur in Längsrichtung der Einsatzböden, sondern auch in Querrichtung per Schwerkraft beim Entladevorgang bewegt werden kann. In Querrichtung wird das Schüttgut in einer Querschnittsbetrachtung zum tiefsten Punkt der Einsatzböden durch die Schwerkraft gedrängt. Vorzugsweise sollte dieser tiefste Punkt auf einer parallelen zur Längsachse des Kessels liegen, die ebenfalls durch den Auslass läuft. Dadurch wird die Effizienz des Ladevorgangs bzgl. einer vollständigen Entladung und der Entladegeschwindigkeit weiter verbessert.

Grundsätzlich können die Einsatzböden im Querschnitt bei der soeben beschriebenen Ausführungsform jede beliebige, geeignete Form aufweisen. Bspw. ist bei einem mittig angeordneten Auslass eine V-Form denkbar. Bevorzugterweise weisen die Einsatzböden in einer Querschnittsbetrachtung ein bogenförmiges Profil auf. Vorteilhafterweise ist der Radius dieser Bogenform größer als der Radius des zylindrischen Behälters. Vorteilhaft ist hierbei, dass derart ausgebildete Einsatzböden fest im Behälter anliegen und zwischen der Kante der Ausnehmung im Bodenbereich des Behälters und den Einsatzböden keine Lücke oder dergleichen verbleibt, durch die Schüttgut ungewollt aus dem Kessel austreten könnte. Zweckmäßigerweise ist der Auslass bei der Verwendung derartiger Einsatzböden in Querrichtung des Kessels mittig anzuordnen. Durch das Längs- und Quergefälle dieser Einsatzböden wird das Schüttgut direkt zum Auslass hingeleitet und es sind keine Stau- oder Ablagebereiche vorhanden, an denen sich Schüttgut permanent ablagern kann.

Bevorzugterweise sind die Einsatzböden mit Bezug auf die Längsachse des Behälters unter einem Winkel von 20°bis 45°, bevorzugt 30° bis 40°, besonders bevorzugt 35°, geneigt ausgebildet. Es hat sich gezeigt, dass sich bei derartigen Neigungswinkeln eine besonders gute Balance zwischen effizienter Entleerung und optimiertem Laderaum einstellt.

In einer weiteren bevorzugten Ausführungsform sind an den Einsatzböden Mittel zum Auflockern des Transportgutes vorgesehen. Hierdurch kann der Entladevorgang weiter verbessert werden. Die Mittel sind zweckmäßigerweise auf der dem Laderaum zugewandten Seite der Einsatzböden, d. h. auf der Oberseite, vorzusehen. Durch die Mittel zum Auflockern wird die Haftung des rieselfähigen Schüttgutes an der Oberfläche der Einsatzböden verringert und somit die Wahrscheinlichkeit, dass Schüttgut im Kessel verbleibt, weiter reduziert. Grundsätzlich kann als Mittel zum Auflockern jedes hierfür geeignete Mittel vorgesehen sein. Bevorzugt werden die Mittel zum Auflockern des Transportgutes durch eine Vielzahl von Druckluftschläuchen gebildet, die auf der Oberfläche der Einsatzböden angeordnet sind. Durch ein kurzzeitiges, wiederholtes Einlassen von Druckluft in die Schläuche werden diese kurzzeitig aufgeblasen, wodurch das sich darauf befindende Schüttgut aufgelockert, bzw. nach oben geschleudert wird und sich insgesamt die Adhäsionskräfte, die auf das Schüttgut wirken, reduzieren.

Ferner wird die der Erfindung zugrunde liegende Aufgabe durch ein Verfahren mit den Merkmalen des Anspruchs 14 gelöst. Hiernach wird bei einem Verfahren zum Herstellen eines Kessels für ein Silofahrzeug in der Wandung eines zylinderförmigen Behälters in einem mittleren Bereich eine Ausnehmung eingeschnitten, in das Innere des Zylinders werden zwei Einsatzböden, die entlang ihrer Längsachse jeweils im Wesentlichen geradlinig verlaufen, derart eingesetzt, dass jeweils ein Endbereich eines der Einsatzböden durch die Ausnehmung hindurch nach außen ragt. Ferner werden die Einsatzböden mittels Verschweißung mit der Behälterwand und in ihren aus der Ausnehmung herausragenden Endbereichen miteinander verbunden. Schließlich wird in einem letzten Schritt im Verbindungsbereich zwischen den beiden Einsatzböden ein Kesselauslass vorgesehen, durch den das in den Kessel aufzunehmende Schüttgut wieder aus dem Kessel zum Entladen herausgelassen werden kann. Hierdurch wird ein Kessel geschaffen, der einen relativ großen Ladebereich aufweist, auf einem einfach herzustellenden, zylindrischen Behälter basiert und trotzdem gute Entladeeigenschaften aufweist.

Im Folgenden wird die Erfindung anhand eines in der Zeichnung dargestellten Ausführungsbeispiels näher erläutert. Es zeigen schematisch
- Fig. 1: eine perspektivische Seitenansicht eines Kessels für ein Silo- fahrzeug,
- Fig. 2: eine Seitenansicht des Kessels aus Figur 1,
- Fig. 3: eine Innenansicht in den Kessel aus den Figuren 1 und 2 hinein,
- Fig. 4: eine weitere Innenansicht des Kessels aus den Figuren 1 und 2,
- Fig. 5: eine perspektivische Ansicht eines Teilbereichs eines Einsatzbö- dens,
- Fig. 6: eine Detailansicht des Einsatzbödens aus Figur 5, und
- Fig. 7: eine Schnittansicht des Einsatzbödens aus Figur 5

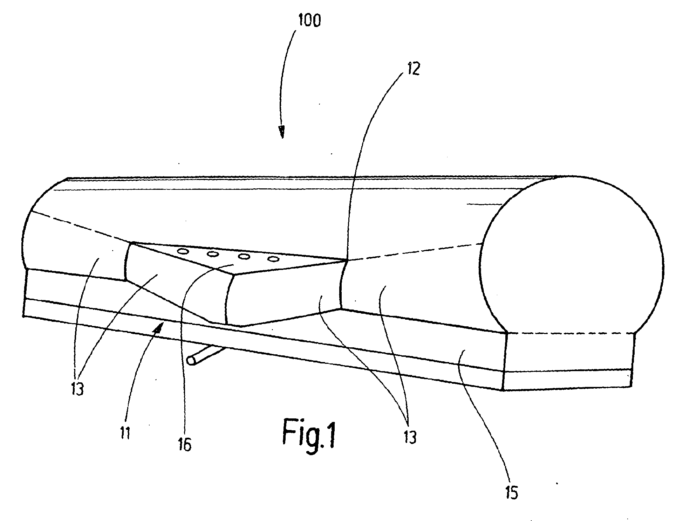

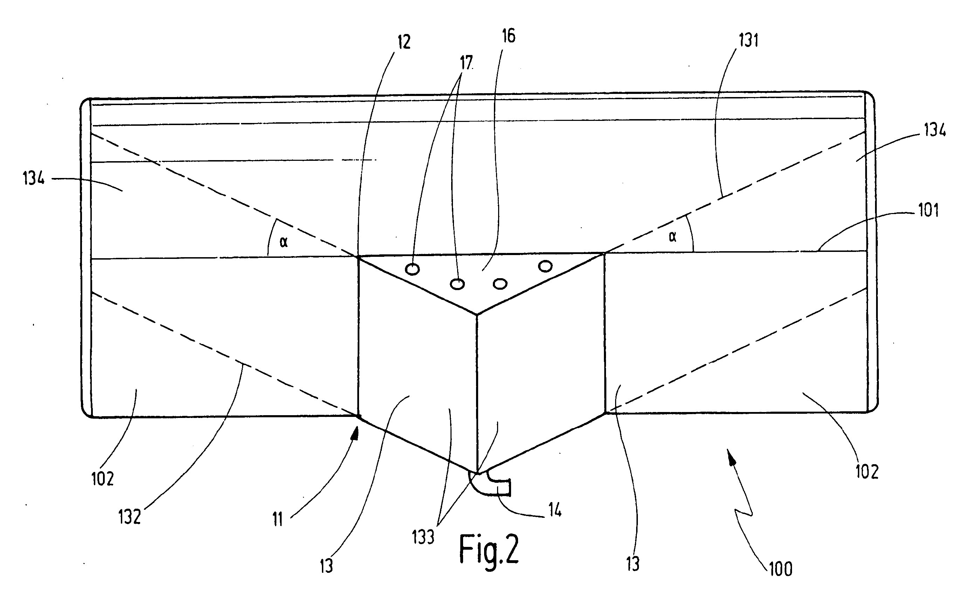

Die Figuren 1 und 2 zeigen jeweils eine perspektivische und eine Seitenansicht eines Kessels 100 für ein Silofahrzeug. Der vorliegend dargestellte Kessel 100 ist zur Montage auf einen Eisenbahnwaggon ausgebildet, wobei derartige Kessel 100 durch Vornahme einer leichten Modifizierung auch ohne weiteres auf Aufliegern von Sattelschleppern oder dergleichen montiert werden können. Der Kessel 100 umfasst einen zylindrischen Behälter 10, der in einen in der Draufsicht rechteckigen Grundrahmen 15 eingelassen ist (siehe Figur 1). Der Grundrahmen 15 wird zur Montage des Kessels 100 auf einem Eisenbahnwaggon verwendet. Im Bodenbereich 11 des Kessels 100 ist im Behälter 10 in etwa mittig eine Ausnehmung 12 vorhanden. Die Ausnehmung 12 verläuft in etwa über den halben Umfang des zylindrischen Behälters 10 und weist in einer Draufsicht einen rechteckigen Grundriss auf.

Ins Innere des Behälters 10 sind zwei Einsatzböden 13 eingesetzt, die in den Darstellungen in Figur 1 und 2 teils durch durchgezogene, teils durch gestrichelte Linien angedeutet sind. Die Einsatzböden 13 weisen in einem Querschnitt ein bogenförmiges Profil, mit einem größeren Radius als derjenige des zylindrischen Behälters 10, auf. Die gestrichelten Linien deuten denjenigen Teil der Einsatzböden 13 an, der sich im Inneren des Behälters 10 befindet und nicht von außen sichtbar ist, wohingegen im Bereich der Ausnehmung 12 die Linien durchgezogen sind und denjenigen Teil der Einsatzböden 13 andeuten, der durch die Ausnehmung 12 hindurch nach außen vorsteht und entsprechend von außen sichtbar ist. Die mit dem Bezugszeichen 131 versehene obere Linie stellt dabei eine Außenkante des Einsatzbödens 13 entlang deren Längsrichtung dar, während die untere Linie 132 den mittleren Bodenbereich des Einsatzbödens 13 bezeichnet. Die ersten Endbereiche 133 der Einsatzböden 13 sind jeweils durch die Ausnehmung 12 hindurch nach außen geführt und sind mit ihren Stirnflächen gegeneinander stoßend angeordnet. Die Stirnflächen der beiden Einsatzböden 13 sind durch Verschweißung miteinander verbunden. Ebenso sind die Einsatzböden 13 mittels Verschweißung mit der Wandung des Behälters 10 fest verbunden. Die Verschweißung der Einsatzböden 13 mit der Wandung des Behälters 10 erfolgt insbesondere im Bereich der Außenkanten 131 der Einsatzböden 13.

Ebenfalls im Verbindungsbereich der beiden Einsatzböden 13 ist ein Auslass 14 für den Kessel 100 vorgesehen, durch den das im Kessel 100 gelagerte Schüttgut während des Entladevorgangs entnommen werden kann. Die Einsatzböden 13 sind jeweils gegenüber der Längsachse 101 des Behälters 10 geneigt angeordnet. Der Neigungswinkel wird durch die Winkel α illustriert. Da die ersten Endbereiche 133 der Einsatzböden 13 jeweils im Bodenbereich 11 des Kessels 100 angeordnet sind und an ihren freien Enden, dort wo der Auslass 14 angeordnet ist, den tiefsten Punkt des Kessels 100 bilden, sind die zweiten, gegenüberliegend angeordneten Endbereiche 134 der Böden 13 entsprechend höher angeordnet. Durch die Längsneigung der Böden 13 wird somit eine schiefe Ebene für das Schüttgut im Inneren des Behälters 10 vorgesehen, an der entlang das Schüttgut zum Auslass 14 rieseln kann. Durch die Vorsehung einer Ausnehmung 12 und das Einsetzen der ersten Endbereiche 133 der Böden 13 in dieser Ausnehmung 12 vergrößert sich das nutzbare Volumen des Kessels 100.

Einzig die zwischen Bodenbereich 132 der Böden 13 und untere Wandung des Behälters 10 verbleibenden Bereiche 102 können nicht zur Lagerung von Schüttgut verwendet werden. Vorliegend beträgt der Winkel α ca. 30°. Grundsätzlich ist dieser Neigungswinkel α jedoch variierbar und hängt insbesondere von den Eigenschaften des zu befördernden Schüttgutes (bspw. Konsistenz, Adhäsionsfähigkeit, etc.) ab. Grundsätzlich gilt, dass je größer der Winkel α ist, desto größer ist die Schwerkraftkomponente, die auf die einzelnen Partikel des Schüttgutes wirkt. Gleichzeitig gilt, dass je kleiner der Neigungswinkel α ist, desto größer ist der nutzbare Lagerraum.

Oberhalb der beiden miteinander verbundenen ersten Endbereiche 133 der Einsatzböden 13 ist zur Schließung des Kessels 100 ein dreieckförmiges Wandungsstück 16 beidseitig eingesetzt. Das Wandungsstück 16 ist eben ausgebildet, damit die Bereite des Kessels 100 insgesamt nicht über die Breite des zylindrischen Behälters 10 hinausgeht. Dies wäre aus verkehrstechnischer Sicht ungünstig. Da das Wandungsstück 16 eben ausgebildet ist und demnach eher dazu neigt, durch die bei vollem Kessel 100 auftretenden Innendruckkräfte verformt zu werden, sind zwischen den beiden Wandungsstücken 16 Zugstreben 17 angeordnet.

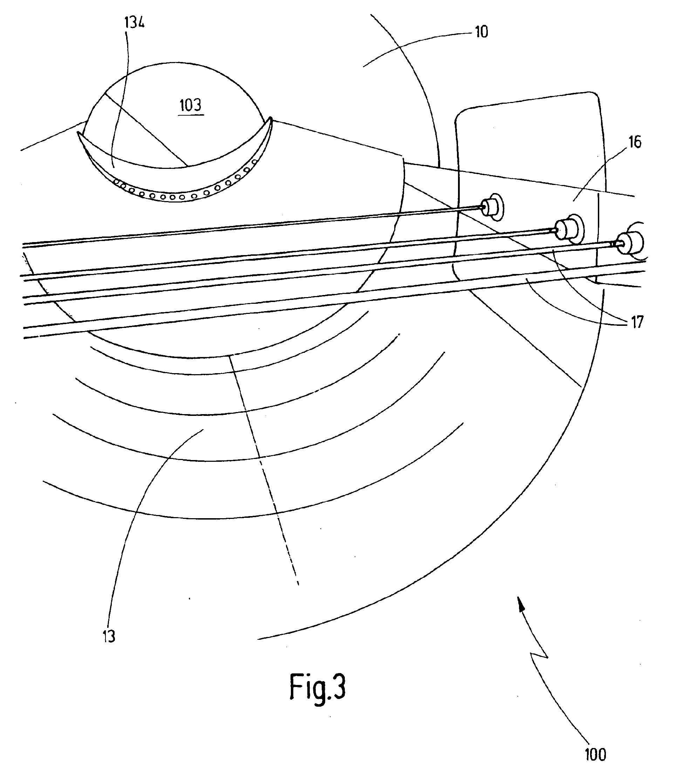

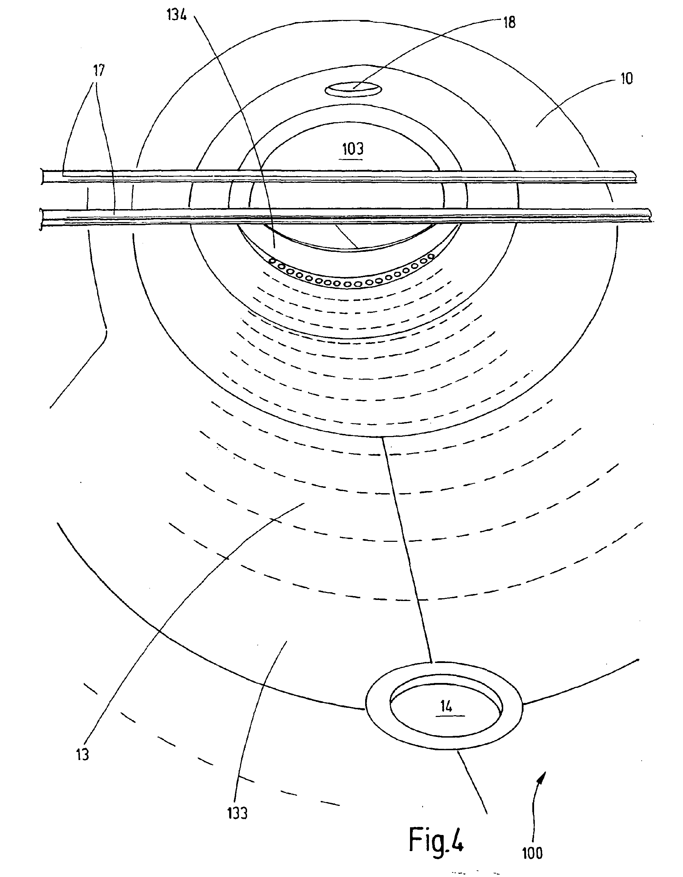

Die Figuren 3 und 4 zeigen eine perspektivische Ansicht ins Innere des Kessels 100. Es ist erkennbar, dass der Einsatzböden 13 vom Auslass 14 bis zu einem Endbereich 103 des Behälters 10 schräg nach oben verläuft. Ferner ist erkennbar, dass im oberen Bereich des Kessels 100 ein Einlass 18 zum Einfüllen des Schüttgutes vorgesehen ist. Ferner ist der bogenförmige Verlauf der Einsatzböden 13 in Querrichtung dargestellt. Hierdurch weisen die Einsatzböden 13 entsprechend nicht nur ein Längsgefälle, sondern auch ein Quergefälle auf. Das durch den Einlass 18 eingefüllte Schüttgut wird bei geöffnetem Auslass 14 demnach durch die Schwerkraft nicht nur von den Endbereichen 103 in Richtung des Auslasses 14 hingedrängt, sondern auch von den Seitenbereichen hin zur Kesselmitte. Durch das Längsgefälle der Einsatzböden 13 nimmt die Höhe des Innenraums des Kessels 100 vom Auslass 14 zu den Endseiten 103 hin konstant ab. Die geringste Höhe weist der Innenraum demnach direkt am Endbereich 103 auf. Hier beträgt die Höhe, wie in den Figuren 3 und 4 dargestellt, nur noch etwas über die Hälfte der Behälterhöhe.

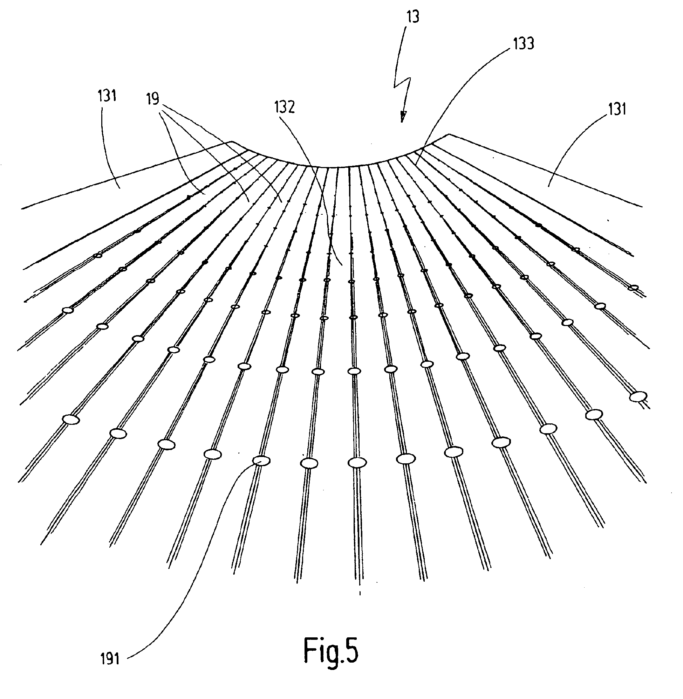

Die Figuren 5, 6 und 7 zeigen jeweils eine Darstellung eines Einsatzbödens 13 bzw. eines Teilbereichs hiervon. Figur 5 zeigt eine perspektivische Ansicht entlang eines Einsatzbödens 13 in Richtung des ersten Endbereichs 133. Der Einsatzböden 13 besteht aus einer aus Metall gefertigten, bogenförmigen Platte, auf deren Oberfläche eine Vielzahl von in Längsrichtung verlaufenden, parallel zueinander angeordneten Druckluftschläuchen 19 vorgesehen ist. Die Druckluftschläuche 19 sind mit in regelmäßigen Abständen vorgesehenen Befestigungsmitteln 191 am Einsatzböden 13 befestigt. Durch die Druckluftschläuche 19 kann intervall- bzw. stoßweise Druckluft in die Schläuche eingeführt werden, wodurch diese zeitweilig aufgeblasen werden, bzw. Ihren maximalen Durchmesser erreichen. Hierdurch kann darauf aufliegendes Schüttgut aufgelockert bzw. hochgeworfen werden, wodurch der Entladevorgang verbessert wird. Im Bereich der Seitenteile 131 ist jeweils ein erhöhter Randbereich vorgesehen, dessen Oberfläche bündig mit den Druckschläuchen 19 abschließt.

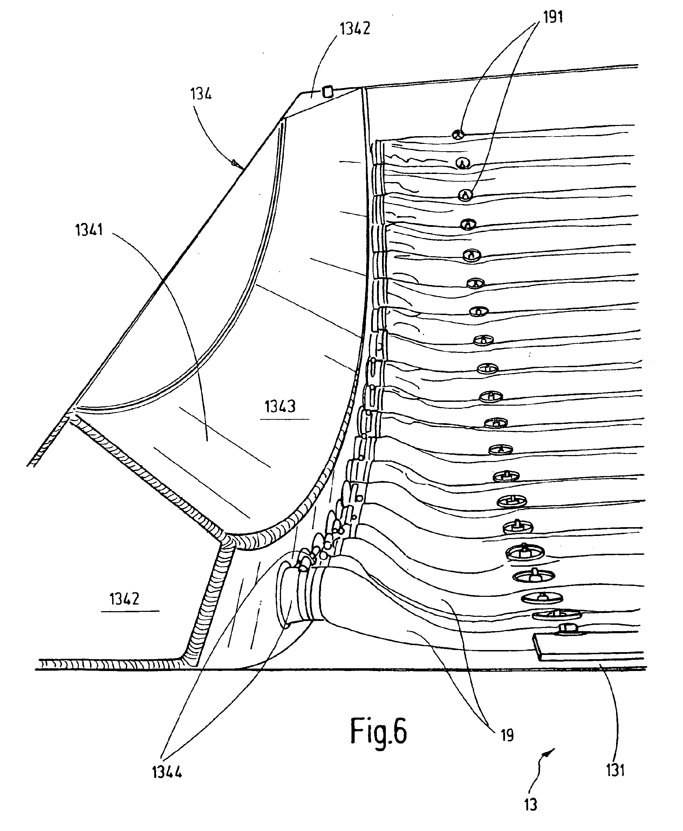

Figur 6 zeigt eine Detailansicht des zweiten Endbereichs 134 eines Einsatzbodens 13. Der Endbereich 134 umfasst ein massives Endstück 1341, bestehend aus zwei ebenen Randbereichen 1342 und einem dazwischen liegenden, mittleren Bereich 1343, der bogenförmig verlaufend und in Richtung der Druckluftschläuche 19 hin abgeschrägt nach unten verlaufend ausgebildet ist. An der Stirnseite des mittleren Bereichs 1343 schließen sich eine Vielzahl von Anschlussstutzen 1344 für Druckluftschläuche 19 an. An jedem Anschlussstutzen 1344 ist jeweils ein Druckluftschlauch 19 angeschlossen. Ein drucklufterzeugendes System (hier nicht dargestellt) kann über einen Anschluss am Endstück 1341 (hier nicht dargestellt) Druckluft in die einzelnen Druckluftschläuche 19 einbringen.

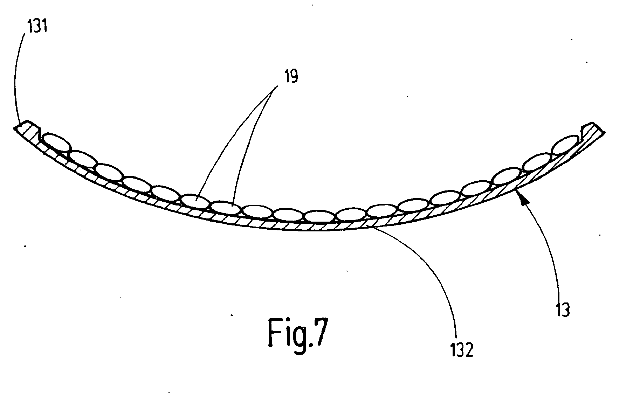

Figur 7 zeigt einen Querschnitt durch den Einsatzböden 13, der in den Figuren 5 und 6 dargestellt ist. Hierin in der bogenförmige Verlauf des Einsatzbödens 13 erkennbar sowie die darauf nebeneinander und parallel zueinander ausgerichtet angeordneten Druckschläuche 19.

### Bezugszeichenliste

- 100: Kessel
- 10: Behälter
- 101: Längsachse
- 102: nicht nutzbarer Bereich
- 103: Endbereich
- 11: Bodenbereich
- 12: Ausnehmung
- 13: Einsatzböden
- 131: Außenkante
- 132: Bodenbereich
- 133: erster Endbereich
- 134: zweiter Endbereich
- 1341: Endstück
- 1342: Seitenbereich
- 1343: Mittlerer Bereich
- 1344: Anschlussstutzen
- 14: Auslass
- 15: Rahmen
- 16: Wandungsstück
- 17: Zugstreben
- 18: Einlass
- 19: Druckluftschläuche
- 191: Befestigungsmittel

## Patentansprüche

1. Kessel (100) für ein Silofahrzeug, umfassend einen zylindrischen Behälter (10), einen Auslass (14) im Bodenbereich (11) des Kessels (100), und zwei Einsatzböden (13), die zum Einsetzen in den Behälter (10) vorgesehen sind, wobei die Einsatzböden (13) derart in den Behälter (10) einsetzbar sind, dass jeweils ein erster Endbereich (133) der Einsatzböden (13) dem Auslass (14) zugeordnet ist, und wobei die Einsatzböden (13) jeweils vom ersten Endbereich (133) zu einem gegenüberliegenden, zweiten Endbereich (134) durchgehend eine Neigung mit Bezug auf die Längsachse (101) des Behälters (10) aufweisen, und wobei
die ersten Endbereiche (133) der Einsatzböden (13) durch die Ausnehmung (12) hindurch nach außen ragen,
dass die ersten Endbereiche (133) der Einsatzböden (13) mit ihren Stirnflächen außerhalb des zylindrischen Behälters (10) gegeneinander stoßend angeordnet und die Stirnflächen mittels Verschweißung miteinander verbunden sind, wobei im Verbindungsbereich der beiden Einsatzböden (13) der Auslass (14) angeordnet ist, **dadurch gekennzeichnet, dass** im Bodenbereich des Behälters (10), insbesondere im mittleren Bodenbereich eine in einer Draufsicht rechteckige Ausnehmung (12) vorgesehen ist.

2. Kessel gemäß Anspruch 1,
**dadurch gekennzeichnet,**
**dass** die Einsatzböden (13) fest im Behälter (10), insbesondere mittels Verschweißung, eingebaut sind.

3. Kessel gemäß Anspruch 1 oder 2,
**dadurch gekennzeichnet,**
**dass** die Einsatzböden (13) entlang der Längsachse (101) des Behälters (10) ausgerichtet sind.

4. Kessel gemäß einem der vorhergehenden Ansprüche,
**dadurch gekennzeichnet,**
**dass** die Einsatzböden (13) in einer Querschnittsbetrachtung in Bezug auf die Horizontalachse zumindest teilweise geneigt sind.

5. Kessel gemäß Anspruch 4,
**dadurch gekennzeichnet,**
**dass** die Einsatzböden (13) in einer Querschnittsbetrachtung ein bogenförmiges Profil aufweisen.

6. Kessel gemäß Anspruch 5,
**dadurch gekennzeichnet,**
**dass** der dem Bogenverlauf der Einsatzböden (13) zugeordnete Radius größer ist als der Radius des zylinderförmigen Behälters (10).

7. Kessel gemäß einem der vorhergehenden Ansprüche,
**dadurch gekennzeichnet,**
**dass** wenigstens einer der zwei Einsatzböden (13) mit Bezug auf die Längsachse (101) des Behälters (10) unter einem Winkel von 20° bis 45 °, bevorzugt 30 bis 40 °, besonders bevorzugt 35 °, geneigt ist.

8. Kessel gemäß einem der vorhergehenden Ansprüche,
**dadurch gekennzeichnet,**
**dass** an den Einsatzböden (13) Mittel zum Auflockern des Transportgutes, insbesondere Druckluftschläuche (19), vorgesehen sind.

9. Silofahrzeug,
**dadurch gekennzeichnet,**
**dass** es einen Kessel (100) gemäß einem der vorhergehenden Ansprüche umfasst.

10. Verfahren zum Herstellen eines Kessels (100) für ein Silofahrzeug, wobei in die Wandung eines zylinderförmigen Behälters (10) in einem mittleren Bereich eine in einer Draufsicht rechteckige Ausnehmung (12) eingeschnitten wird und wobei in das Innere des zylinderförmigen Behälters (10) zwei Einsatzböden (13), die entlang ihrer Längsachse jeweils im Wesentlichen geradlinig verlaufen, eingesetzt werden, und wobei
die zwei Einsatzböden (13) derart in das Innere des zylinderförmigen Behälters (10) eingesetzt werden, dass jeweils ein erster Endbereich (133) der Einsatzböden (13) durch die Ausnehmung (12) hindurch nach außen ragt,
dass die Einsatzböden (13) mittels Verschweißung mit der Behälterwand und an den Stirnflächen ihrer aus der Ausnehmung heraus ragenden ersten Endbereiche (133) miteinander, ebenfalls mittels Verschweißung, verbunden werden, und
dass im Verbindungsbereich der beiden Einsatzböden (13) ein Kesselauslass (14) vorgesehen wird.

## Claims

1. Vessel (100) for a silo vehicle, comprising a cylindrical container (10), an outlet (14) in the bottom area (11) of the vessel (100), and two insert bases (13), which are provided for insertion into the container (10), wherein the insert bases (13) can be inserted into the container (10) in such a manner that in each case, a first end region (133) of the insert bases (13) is assigned to the outlet (14), and wherein the insert bases (13) in each case have an incline with respect to the longitudinal axis (101) of the container (10) continuously from a first end region (133) to an opposite second end region (134), and wherein
the first end regions (133) of the insert bases (13) project outwardly through the recess (12),
the first end regions (133) of the insert bases (13) are arranged butting against one another outside of the cylindrical container (10) by means of their end faces and the end faces are connected to one another by means of welding, wherein the outlet (14) is arranged in the connection region of the two insert bases (13) of the outlet (14), **characterised in that** a recess (12), which is rectangular in a plan view, is provided in the bottom area of the container (10), particularly in the central bottom area.

2. Vessel according to Claim 1, **characterised in that** the insert bases (13) are securely integrated in the container (10), particularly by means of welding.

3. Vessel according to Claim 1 or 2, **characterised in that** the insert bases (13) are orientated along the longitudinal axis (101) of the container (10).

4. Vessel according to any one of the preceding claims, **characterised in that**, in a cross-sectional view, the insert bases (13) are inclined at least to some extent with respect to the horizontal axis.

5. Vessel according to Claim 4, **characterised in that**, in a cross-sectional view, the insert bases (13) have an arcuate profile.

6. Vessel according to Claim 5, **characterised in that** the radius assigned to the course of the arc of the insert bases (13) is larger than the radius of the cylindrical container (10).

7. Vessel according to any one of the preceding claims, **characterised in that** at least one of the two insert bases (13) is inclined with respect to the longitudinal axis (101) of the container (10) at an angle of 20° to 45°, preferably 30° to 40°, particularly preferably 35°.

8. Vessel according to any one of the preceding claims, **characterised in that** means for loosening up the transported goods, particularly compressed air hoses (19), are provided on the insert bases (13).

9. Silo vehicle, **characterised in that** it comprises a vessel (100) according to any one of the preceding claims.

10. Method for producing a vessel (100) for a silo vehicle, wherein a recess (12), which is rectangular in a plan view, is cut into the wall of a cylindrical container (10) in a central region and wherein two insert bases (13), which run essentially rectilinearly along their longitudinal axis in each case, are inserted into the interior of the cylindrical container (10), and wherein
the two insert bases (13) are inserted into the interior of the cylindrical container (10) in such a manner that in each case, a first end region (133) of the insert bases (13) projects outwardly through the recess (12),
the insert bases (13) are connected by means of welding to the container wall and, at the end faces of their end regions (133) projecting out of the recess, to one another, likewise by means of welding, and
that in the connecting region of the two insert bases (13), a vessel outlet (14) is provided.

## Revendications

1. Conteneur (100) pour une citerne pneumatique, comprenant un réservoir cylindrique (10), une sortie (14) dans la zone du fond (11) du conteneur (100) et deux fonds à insérer (13), qui sont prévus pour être insérés dans le réservoir (10), les fonds à insérer (13) étant insérables dans le réservoir (10) de sorte que chaque fois une première zone d'extrémité (133) des fonds à insérer (13) soit associée à la sortie (14), les fonds à insérer (13) comportant chaque fois d'une première zone d'extrémité (133) vers une deuxième zone d'extrémité (134) opposée en continu une inclinaison en rapport avec l'axe longitudinal (101) du réservoir (10) et
les premières zones d'extrémité (133) des fond à insérer (13) saillant vers l'extérieur à travers l'évidement (12),
les premières zones d'extrémité (133) des fonds à insérer (13) étant disposées par leurs faces frontales à l'extérieur du réservoir cylindrique (10) en se touchant et les faces frontales étant reliées entre elles par soudure, la sortie (14) étant disposée dans la zone de liaison des deux fonds à insérer (13),
**caractérisé en ce que**
dans la zone du fond du réservoir (10), notamment dans la zone centrale du fond est prévue un évidement (12) rectangulaire, vu en élévation.

2. Conteneur selon la revendication 1, **caractérisé en ce que** les fonds à insérer (13) sont fixement montés dans le réservoir (10), notamment au moyen d'une soudure.

3. Conteneur selon la revendication 1 ou 2, **caractérisé en ce que** les fonds à insérer (13) sont orientés le long de l'axe longitudinal (101) du réservoir (10).

4. Conteneur selon l'une quelconque des revendications précédentes, **caractérisé en ce que**, considérés dans leur section transversale, les fonds à insérer (13) sont inclinés au moins en partie par rapport à l'axe horizontal.

5. Conteneur selon la revendication 4, **caractérisé en ce que**, considérés dans leur section transversale, les fonds à insérer (13) comportent un profil cintré.

6. Conteneur selon la revendication 5, **caractérisé en ce que** le rayon associé au trajet cintré des fonds à insérer (13) est supérieur au rayon du réservoir cylindrique (10).

7. Conteneur selon l'une quelconque des revendications précédentes, **caractérisé en ce qu'**au moins l'un des deux fonds à insérer (13) est incliné d'un angle de 20° à 45°, de préférence, de 30° à 40°, de façon particulièrement préférée de 35° par rapport à l'axe longitudinal (101) du réservoir (10).

8. Conteneur selon l'une quelconque des revendications précédentes, **caractérisé en ce que** sur les fonds à insérer (13) sont prévus des moyens pour aérer le produit à transporter, notamment des flexibles d'air comprimé (19).

9. Citerne pneumatique, **caractérisée en ce qu'**elle comprend un conteneur (100) selon l'une quelconque des revendications précédentes.

10. Procédé de fabrication d'un conteneur (100) pour une citerne pneumatique, sachant que dans la paroi d'un réservoir cylindrique (10) on incise dans une zone centrale un évidement (12) rectangulaire, vu en élévation et à l'intérieur du réservoir cylindrique (10) on insère deux fonds à insérer (13), qui le long de leur axe longitudinal s'étendent chacun sensiblement de façon rectiligne et
on place les deux fonds à insérer (13) à l'intérieur du réservoir cylindrique (10) de sorte que chaque fois une première zone d'extrémité (133) des fonds à insérer (13) saillisse vers l'extérieur à travers l'évidement (12),
on relie les fonds à insérer (13) au moyen d'une soudure avec la paroi du réservoir et également l'un à l'autre au moyen d'une soudure sur les faces frontales de leurs premières zones d'extrémité (133) saillant hors de l'évidement et
une sortie de conteneur (14) étant prévue dans la zone de liaison des deux fonds à insérer (13).
